# DEMANDE DE BREVET EUROPEEN

(11) **EP 2 583 894 A2**
(43) Date de publication de la demande: **24.04.2013**
(21) Numéro de dépôt: 12188948.9
(22) Date de dépôt: 18.10.2012
(51) Int. Cl.: B64C 1/18, B64D 11/00

(54) **Cabine d'aéronef permettant d'accueillir des passagers sur plusieurs niveaux et aéronef correspondant**

(30) Priorité: 19.10.2011 FR 1159454
(71) Demandeur: Airbus, 31700 Blagnac (FR)
(72) Inventeur: Dupont, Willy-Pierre, 31820 PIBRAC (FR)
(74) Mandataire: Quantin, Bruno Marie Henri

(57) **Abrégé**

Un aéronef selon l'invention permet d'accueillir des passagers et comporte un premier pont pour la réception de passagers, un second pont (22) pour la réception de passagers, superposé au premier pont, ainsi qu'au moins une porte d'accès (16, 21).

Le premier pont présente au moins une première zone (10) présentant un plancher sensiblement plan et se trouvant au niveau de la porte d'accès (16) et au moins une seconde zone (12) présentant un plancher décalé en hauteur par rapport à la première zone (10).

La cabine comporte de plus au moins une rampe (24) rectiligne reliant la première zone (10) du premier pont à la seconde zone (12) du premier pont, et au moins une rampe (24) rectiligne reliant la première zone (10) du premier pont au second pont (22).

## Description

La présente invention concerne une cabine d'aéronef permettant d'accueillir des passagers sur plusieurs niveaux, ainsi qu'un aéronef correspondant.

Le domaine de la présente invention est l'aménagement intérieur d'un fuselage d'aéronef destiné au transport commercial de passagers. On considère ici des aéronefs destinés à transporter un nombre de passagers relativement important, par exemple supérieur à 100.

La structure classique à l'intérieur d'un aéronef pour le transport de passagers comporte généralement un fuselage de forme sensiblement cylindrique circulaire à l'intérieur duquel est disposé un pont horizontal (lorsque l'aéronef est posé au sol) qui sert, d'une part, de plancher pour une cabine destinée à recevoir les passagers, et, d'autre part, à réaliser une séparation entre une soute destinée au transport de bagages et de conteneurs et la cabine précitée. Dans certains aéronefs (tels ceux commercialisés sous la marque A380) un double pont est prévu à l'intérieur du fuselage. Il s'agit d'aéronefs dont le fuselage présente une largeur et une hauteur -très- importantes. Les deux ponts sont sensiblement plans et permettent de réaliser deux cabines superposées avec à chaque fois une hauteur de plafond de l'ordre de 2,50 m. Ils sont reliés par des escaliers et/ou des ascenseurs.

Des documents, tels EP-1 164 077 ou par exemple les documents EP-0780335, ou EP-0 514 650, ou bien encore US-6,547,184, révèlent des structures d'aéronef présentant un fuselage de grand diamètre et permettant d'accueillir des passagers sur deux ponts parallèles disposés l'un au-dessus de l'autre.

EP 2460727 décrit une cabine d'aéronef comprenant un premier tronçon comportant un pont inférieur et un pont supérieur, un deuxième tronçon comportant un pont intermédiaire. Une rampe courbe relie le pont inférieur au pont intermédiaire, et une rampe courbe relie le pont intermédiaire au pont supérieur. L'embarquement et le débarquement des passagers peut s'effectuer intégralement depuis le pont intermédiaire, pourvu d'une porte d'accès. Les trois ponts sont constitués chacun d'une surface plane, lesquelles surfaces sont sensiblement parallèles.

Pour les aéronefs de taille inférieure, notamment des aéronefs dont la cabine est conçue pour recevoir des passagers sur un seul pont et qui présentent deux couloirs longitudinaux permettant l'accès aux sièges desdits passagers, il est connu de réaliser à l'intérieur de la cabine une structure reposant sur le pont formant le plancher de la cabine ou bien une structure suspendue au plafond de la cabine pour réaliser une mezzanine ou similaire. Les documents EP-1 778 540 ou US-7,290,735 révèlent par exemple de tels aménagements de cabine d'aéronef.

Pour ces divers types d'aéronefs, notamment ceux décrits précédemment et classés habituellement dans la catégorie des aéronefs double pont ou des aéronefs mono pont double couloir, les aménagements habituels laissent des volumes inutilisés, ou mal utilisés, limitant ainsi le nombre de passagers pouvant venir prendre place sur un siège à l'intérieur de la cabine d'aéronef ou la quantité de bagages ou matériels pouvant être stockés dans la cabine. En particulier, dans l'aéronef décrit par EP2460727, une place importante est perdue au niveau des rampes reliant les trois ponts.

La hauteur de soute de ces aéronefs est habituellement prévue pour accueillir des conteneurs à bagages (ou autres) normalisés, connus sous les dénominations LD1, LD2 ou LD3. Ces conteneurs ont une hauteur de 1,62 m.

Un autre problème est le temps nécessaire en zone aéroportuaire pour réaliser l'embarquement et le débarquement des passagers. Le plus souvent, il n'y a pas une bonne adéquation entre les caractéristiques des allées de passage (couloirs) et celles des portes d'accès. Le flux de passagers (théorique) au niveau des portes d'accès est souvent plus important que celui au niveau des couloirs. L'aménagement intérieur d'un tel aéronef pénalise donc le temps d'escale.

Partant de ces constats, la présente invention a alors pour but de fournir une solution permettant d'accroître la capacité d'un aéronef de taille donnée en nombre de passagers en optimisant l'occupation du volume à l'intérieur du fuselage de l'aéronef. Avantageusement, un tel aménagement permettra également un flux plus fluide des passagers à l'intérieur de la cabine de l'aéronef.

À cet effet, la présente invention propose une cabine d'un aéronef permettant d'accueillir des passagers comportant un premier pont pour la réception de passagers" un second pont pour la réception de passagers, superposé au premier pont, ainsi qu'au moins une porte d'accès.

Selon la présente invention, le premier pont présente au moins une première zone présentant un plancher sensiblement plan et se trouvant au niveau d'une porte d'accès et au moins une seconde zone présentant un plancher décalé en hauteur par rapport à la première zone. De plus, au moins une rampe rectiligne relie la première zone du premier pont à la seconde zone du premier pont, et au moins une rampe rectiligne relie la première zone du premier pont au second pont. Comme dans EP2460727, les passagers peuvent être répartis dans une partie du fuselage sur deux niveaux. Il est ainsi possible d'augmenter la capacité de l'aéronef, pour une longueur donnée (et une section de fuselage), en termes de passagers. En outre, le fait que les passagers soient répartis sur deux niveaux, permet une circulation plus fluide à l'intérieur de l'aéronef, ce qui permet un embarquement et un débarquement des passagers plus rapides.

Pour optimiser la capacité de l'accueil de la cabine d'aéronef selon l'invention, le second pont s'étend de préférence au-dessus de la majeure partie de la seconde zone du premier pont.

Comme dans EP2460727, pour faciliter le déplacement des passagers dans une cabine d'aéronef selon la présente invention, il est proposé que des rampes relient la première zone du premier pont d'une part à la seconde zone du premier pont et d'autre part au second pont. Une rampe est de préférence utilisée par rapport à un escalier, ou éventuellement un ascenseur, car si sa pente est limitée, elle ne forme pas d'obstacle et ne pénalise donc pas, ou que très peu, la circulation des passagers et/ou des chariots de service (usuellement appelés trolleys) par rapport à un couloir horizontal.

Cependant, la cabine selon l'invention se distingue de la cabine de EP2460727 en ce que ses rampes sont rectilignes. Chaque rampe a de préférence comme direction une droite, ou peut, en variante suivre une ligne brisée (plusieurs portions de droites non parallèles). Comme on le comprendra à la lecture de la présente description, cette configuration permet d'optimiser l'occupation et l'aménagement de la cabine. En effet, le volume autour des rampes peut être utilisé pour accueillir des sièges ou des rangements. Ce volume est perdu avec les rampes courbes proposées par EP2460727.

De surcroît, le déplacement de trolleys ou de bagages à roulettes est plus facile sur des rampes rectilignes que sur des rampes courbes. Il en va de même des personnes, ce qui permet de réduire les temps d'embarquement/débarquement et peut s'avérer capital en cas d'évacuation en urgence de l'aéronef.

Dans une version préférée, et contrairement à la cabine connue de EP2460727, la première zone du premier pont est dépourvue de siège pour passager entre la porte d'accès et les rampes. Cette première zone peut alors être exclusivement une zone de passage et éventuellement une zone de service, qui peut comprendre des meubles de service (appelés galleys) séparés par des couloirs. Il n'est cependant pas exclu de prévoir dans cette zone des sièges de type strapontins pour le personnel navigant commercial et/ou des emplacements de réception de fauteuils roulants avec des moyens d'ancrage de ces derniers, permettant d'accueillir des passagers à mobilité réduite voyageant alors dans leur propre fauteuil. Avec une telle configuration, l'embarquement des passagers se fait quasiment sans ralentissement au niveau de la porte d'accès. Les passagers se répartissent ensuite, sur la première zone du premier pont, en un flux se dirigeant vers la deuxième zone du premier pont via une première rampe et un flux se dirigeant vers le second pont via une deuxième rampe. Cette répartition se fait dans une zone plus spacieuse que celle disponible dans la cabine de EP2460272 et en empruntant des couloirs qui ne risquent pas d'être bouché par un passager en train de s'installer sur un siège. Les rampes rectilignes utilisées dans une cabine selon l'invention sont avantageusement telles qu'elles présentent une pente d'environ 20 %, par exemple entre 10 et 30 % et de préférence entre 15 et 25 % (on a ici par exemple un dénivelé de l'ordre de 0,45 m à 0,75 m sur une longueur mesurée longitudinalement dans l'aéronef de 3 m ou bien encore 0,75 m à 1,25 m pour une longueur de 5 m). Cette pente correspond à une pente lorsque l'aéronef est posé au sol et que les ponts sont sensiblement à l'horizontale.

De façon usuelle, une cabine selon l'invention comporte des couloirs de circulation. Avantageusement, chaque rampe (24) débouche sur un couloir et s'étend selon la même direction que celui-ci. De préférence, couloirs et rampes s'étendent tous selon la direction de roulis (ou direction longitudinale) de l'aéronef. De préférence, la seconde zone (12) du premier pont et le second pont comportent des colonnes de sièges contre le fuselage, contrairement à la cabine de EP2460727 qui comporte des couloirs le long du fuselage, c'est-à-dire à l'endroit de plus grande courbure et de plus faible hauteur. Dans une version préférée, la seconde zone (12) du premier pont comporte deux couloirs 20 séparant chacun une zone latérale de sièges, qui peut comporter une ou plusieurs colonnes de sièges) et une zone centrale de sièges comportant de préférence plusieurs colonnes de sièges,

La présence de sièges contre le fuselage permet de gagner de la place et d'offrir à de nombreux passagers la possibilité de voir le paysage à travers des hublots.

Une forme de réalisation avantageuse prévoit que le premier pont présente une troisième zone à l'arrière de sa deuxième zone et présentant un plancher sensiblement plan se trouvant décalé en hauteur par rapport à la deuxième zone du premier pont. Cette forme de réalisation permet de n'avoir qu'une seule porte à l'arrière de l'aéronef alors que sinon il conviendrait de prévoir une porte au niveau de la deuxième zone du premier pont et une porte au niveau du second pont. Dans cette forme de réalisation, la troisième zone et la première zone se trouvent toutes deux avantageusement sensiblement à un même niveau. On peut ainsi prévoir des portes à l'avant et à l'arrière de l'aéronef à un même niveau également. En vue de côté, la cabine présente schématiquement une forme rappelant un hexagone : deux côtés opposés de l'hexagone correspondent aux zones recevant les passagers - second pont et deuxième zone du premier pont-, deux autres côtés correspondent aux accès entre la première zone du premier pont et les zones recevant les passagers et les deux derniers côtés correspondent aux accès entre la troisième zone du premier pont et les zones recevant les passagers.

Pour la réalisation du second pont, il peut être prévu que celui-ci présente une structure de plancher avec une forme profilée complexe présentant différentes zones longitudinales, s'étendant longitudinalement. disposées à des niveaux différents, ces zones longitudinales étant planes et reliées par des parois sensiblement verticales, encadrant soit des sièges, soit des couloirs. De préférence, lesdites zones s'étendant sur toute la longueur du second pont ou au moins de la première rangée de sièges à la dernière. Avantageusement, la différence de niveau entre une zone longitudinale formant un couloir et une zone longitudinale contiguë recevant des sièges est inférieure à 0,60m, de façon à limiter la hauteur de marche qu'un passager doit franchir (en montée ou en descente) pour passer d'une zone à une autre et à éviter ainsi toute chute en cas d'évacuation précipitée.

Cette forme de réalisation est peu encombrante, permet de réaliser des formes très diverses et est donc très bien adaptée ici à l'optimisation de l'espace de la cabine. Une telle structure de plancher est originale en soi et avantageuse indépendamment des autres caractéristiques de l'invention ; elle pourrait aussi être utilisée dans d'autres configurations d'aménagement de cabine d'aéronef (un seul pont, plusieurs ponts, avec ou sans rampe, ...) et en particulier dans un aéronef connu.

La structure de plancher complexe du second pont peut être par exemple une structure moulée réalisée dans un matériau composite à base de carbone. Le second pont peut alors avantageusement reposer sur des pièces intermédiaires disposées latéralement et venant en appui sur le premier pont. La structure de plancher complexe est par exemple telle qu'elle comporte au moins trois zones longitudinales avec chacune un niveau différent de celui d'une autre zone considérée. Pour une meilleure résistance tout en conservant une épaisseur moindre, un tel plancher complexe comporte avantageusement des raidisseurs transverses.

Pour un meilleur confort des passagers et pour un bon compromis sur la gestion de l'espace dans la cabine, la hauteur disponible entre la seconde zone du premier pont et le second pont est de préférence comprise entre 1,20 m et 2,20 m. Lorsque la hauteur est dans la fourchette basse indiquée, l'espace correspondant est utilisé pour loger des bagages par exemple. Lorsque la hauteur est dans la fourchette haute, l'espace correspondant est par exemple utilisé comme couloir.

La deuxième zone du premier pont présente avantageusement un plancher sensiblement plan. Cette forme de réalisation est plus facile à réaliser. Elle correspond aussi à la forme du "plafond" d'une soute qui est généralement sensiblement plan.

La présente invention concerne également un aéronef destiné au transport de passagers, **caractérisé en ce qu'il** comporte une cabine d'aéronef telle que décrite ci-dessus. Dans un tel aéronef, le premier pont présente avantageusement une troisième zone présentant un plancher sensiblement plan se trouvant décalé en hauteur par rapport à la seconde zone du premier pont, et se situant à l'arrière de l'aéronef.

Un tel aéronef comporte classiquement une voilure. Cette dernière se trouve par exemple sous le premier pont au niveau de la deuxième zone lorsque la hauteur de la voilure est limitée. Pour un aéronef de plus grande capacité et donc avec une voilure plus grande, le premier pont présente de façon avantageuse une troisième zone présentant un plancher sensiblement plan se trouvant décalé en hauteur par rapport à la seconde zone du premier pont, et la troisième zone se situe au-dessus de la voilure de l'aéronef. Dans un tel aéronef, on peut retrouver en arrière de la voilure une configuration similaire à celle que l'on a en avant de la voilure. Un tel aéronef est alors tel que le premier pont présente au-dessus de la voilure et en arrière de celle-ci également une configuration présentant une première zone, une deuxième zone et une troisième zone, la deuxième zone étant décalée par rapport à la première zone et à la troisième zone. On trouve alors ici en vue de côté schématique une forme de la cabine en double hexagone (comme expliqué plus haut), un premier hexagone en avant de la voilure et un second en arrière de celle-ci.

La présente invention est plus particulièrement adaptée pour un aéronef tel que décrit ci-dessus lorsque ledit aéronef présente un fuselage dont le diamètre équivalent est supérieur à 4,50 m. On considère donc ici des aéronefs dont la section présente une surface au moins de l'ordre de 15,9 m², surface correspondant à la surface d'un cercle de 4,50 m de diamètre.

Des détails et avantages de la présente invention ressortiront mieux de la description qui suit, faite en référence aux dessins schématiques annexés sur lesquels :
La figure 1 est une vue en perspective d'un aéronef laissant apparaître par transparence une partie de structure interne d'aéronef,
La figure 2 est une vue schématique en coupe transversale au travers du fuselage de l'aéronef représenté sur la figure 1,
La figure 3 est une vue de côté d'un aéronef selon la présente invention, ledit aéronef présentant une voilure plus importante que l'aéronef représenté sur les figures 1 et 2,
La figure 4 est une vue schématique de deux sections transversales de fuselages permettant de comparer un aménagement intérieur d'aéronef de l'art antérieur avec un aménagement intérieur d'aéronef selon la présente invention,
Les figures 5 et 6 sont des vues similaires aux vues de la figure 4 pour des aéronefs d'un diamètre de fuselage supérieur au diamètre de fuselage des aéronefs concernés par la figure 4,
La figure 7 est une vue schématique de côté d'un aménagement de cabine d'aéronef selon la présente invention,
La figure 8 correspond à une vue de dessus de la cabine montrée sur la figure 7,
La figure 9 est une vue de côté, très schématique, illustrant la présente invention appliquée à un aéronef moyen courrier,
La figure 10 correspond à la figure 9 pour un aéronef long courrier,
Les figures 11A à 11G illustrent des sections transversales d'un plancher de pont supérieur pouvant être utilisées selon la présente invention dans un aéronef,
La figure 12 est une vue schématique illustrant un exemple d'intégration d'un pont supérieur dans la structure d'un aéronef selon l'invention,
La figure 13 illustre une structure complexe moulée pouvant être intégrée dans un aéronef selon l'invention, et
Les figures 14A à 14D sont des sections en coupe transversale d'un fuselage d'aéronef selon la présente invention en différentes positions longitudinales le long d'une même rampe.

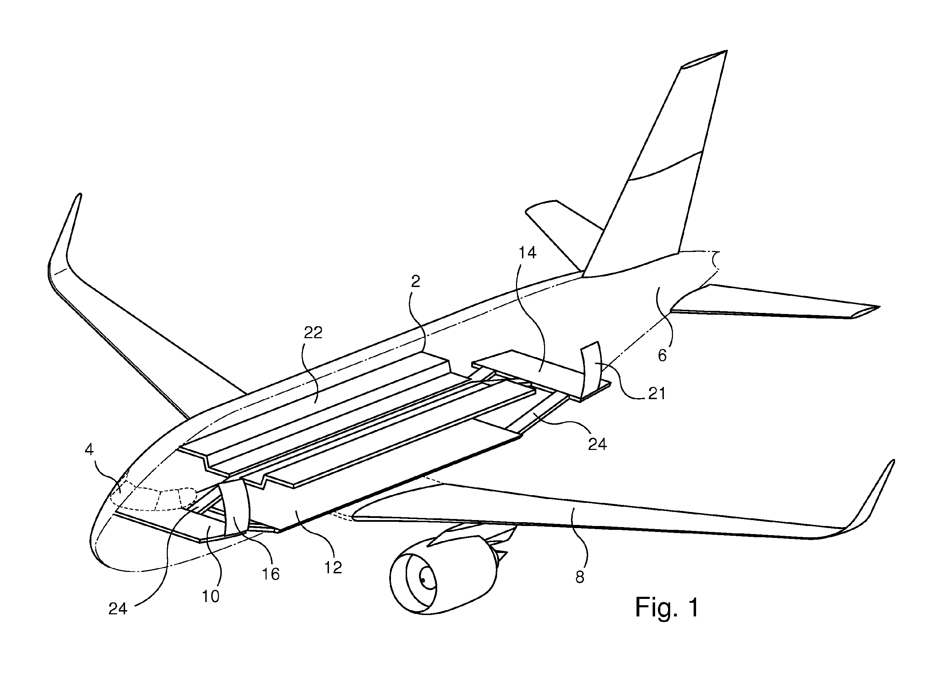

La figure 1 représente schématiquement un aéronef de type moyen courrier. Cette figure est basée sur un aéronef commercialisé par la Société Airbus sous la marque déposée A321.

Il semble inutile de représenter ici une figure similaire à la figure 1 pour un aéronef de marque A321 tel qu'il existe actuellement. Dans un tel aéronef, à l'intérieur du fuselage, un unique pont s'étend du cockpit à l'arrière de l'aéronef formant un plancher plan d'un seul niveau sur toute la longueur de l'aéronef. Ce pont sépare le fuselage en deux zones, une zone inférieure utilisée pour sa plus grande partie comme soute destinée à recevoir des bagages et/ou du fret une zone supérieure qui est destinée à accueillir, d'une part, le cockpit pour le pilotage de l'aéronef et, d'autre part, une cabine pour accueillir le plus confortablement possible des passagers durant leur voyage.

Dans la solution proposée par la présente invention sur la figure 1, on retrouve ainsi un aéronef présentant un fuselage 2 à l'avant duquel se trouve un cockpit 4 et qui se termine à l'arrière par une zone appelée généralement cône arrière 6.

La partie du fuselage qui nous intéresse plus particulièrement dans la présente invention se situe entre le cockpit 4 et le cône arrière 6. Le fuselage présente de manière générale dans cette zone une forme cylindrique circulaire de section sensiblement constante. Cette zone de l'aéronef est destinée classiquement à recevoir les passagers, leurs bagages ainsi qu'éventuellement des marchandises. C'est également dans cette zone centrale du fuselage de l'aéronef qu'une voilure 8 est rattachée au fuselage.

Sur la figure 1, de même que sur les autres figures, on suppose que le fuselage, au moins dans la partie qui nous intéresse, présente une section transversale sensiblement circulaire et que la voilure 8 est rattachée au fuselage en position basse. Toutefois, la présente invention peut s'appliquer à d'autres sections de fuselage, bilobée et/ou à d'autres implantations de voilure. De manière générale, la présente invention est plus particulièrement destinée à des aéronefs dont la section transversale, au niveau de la cabine recevant les passagers, présente un diamètre équivalent de 4,5 m. Cela signifie que de préférence la section transversale du fuselage présente à ce niveau une surface supérieure ou égale à la surface d'une section circulaire de 4,5 m de diamètre, c'est-à-dire une surface de l'ordre de 16 m² ou plus.

Le cockpit 4, destiné à accueillir un pilote et son copilote, est équipé de tous les instruments de commande et de contrôle permettant le pilotage de l'aéronef. On suppose ici que ce cockpit 4 est similaire à un cockpit de l'art antérieur, c'est-à-dire dans le présent exemple, le cockpit 4 est similaire à un cockpit d'A321 (marque déposée).

Ce cockpit 4 comporte alors un plancher (non représenté ici). Le plancher du cockpit 4, dans un A321 (marque déposée), est intégré dans le pont unique décrit plus haut. Un tel plancher se retrouve par exemple aussi dans un aéronef selon la présente invention.

Dans l'aéronef représenté sur la figure 1, on remarque qu'il existe également, comme dans un aéronef de l'art antérieur, une séparation structurelle entre une partie inférieure de l'aéronef destinée à recevoir notamment des bagages et/ou des marchandises et à loger divers équipements techniques (soute avionique, ...) et une zone supérieure dans laquelle sont logés, d'une part, le pilote et le copilote (cockpit 4) et le personnel navigant commercial et, d'autre part, les passagers (cabine d'aéronef). Cette structure réalisant la séparation est appelée dans la présente demande premier pont par analogie au pont d'un aéronef appelé généralement "aéronef mono pont".

Comme on peut le remarquer sur la figure 1, le premier pont de l'aéronef selon l'invention présente principalement trois zones, une première zone 10 à l'avant du fuselage, juste derrière le cockpit 4, une deuxième zone 12 s'étendant sur la majeure partie de la longueur de la cabine d'aéronef, et une troisième zone 14 se trouvant à l'arrière du fuselage 2 s'étendant éventuellement jusque dans le cône arrière 6.

La première zone 10 du premier pont s'étend dans le prolongement du plancher de cockpit 4. Une structure commune forme par exemple le plancher de cockpit 4 et cette première zone 10.

De manière tout à fait classique, on trouve au niveau de la première zone 10 une porte, dite première porte 16, qui est utilisée pour l'embarquement et le débarquement de passagers. Cette première porte 16 est par exemple similaire à une première porte d'un aéronef de marque déposée A321 et aussi appelée porte de type C. Il pourrait aussi s'agir d'une porte plus grande, telle par exemple une porte d'aéronef appelée porte de type A. Le positionnement de la première porte 16, par rapport par exemple au fuselage 2, est lui aussi similaire à ce qui est connu de l'art antérieur. Bien entendu, on ne sortirait pas du cadre de la présente invention en modifiant la structure de la première porte de l'aéronef et/ou son positionnement (dès lors que cette première porte s'ouvre sur la première zone du premier pont).

Ainsi, un passager qui embarque à bord de l'aéronef passe par la première porte 16 et arrive sur la première zone 10 du premier pont.

Dans toute la description de la présente demande de brevet, on supposera que l'aéronef est posé au sol, le sol étant considéré comme plan et horizontal. Les références haut/bas sont faites par rapport à un aéronef se trouvant dans une telle position. Les références avant et arrière sont faites par rapport à un axe longitudinal de l'aéronef correspondant à l'axe longitudinal, ou axe de roulis de l'aéronef, tandis que les notions droite/gauche sont définies par rapport au sens de déplacement de l'aéronef en vol.

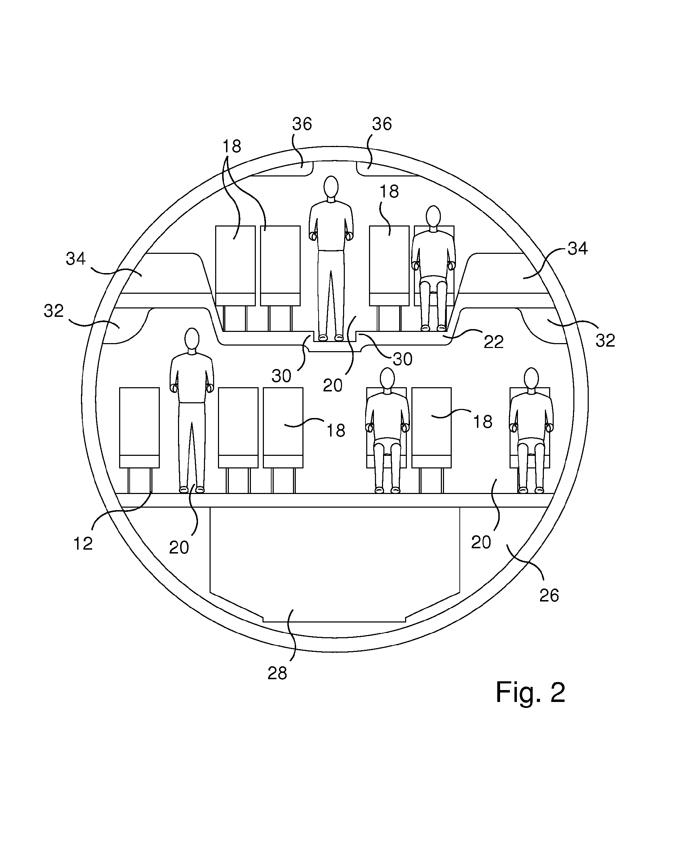

La deuxième zone 12 du premier pont se trouve en arrière de la première zone 10 et en dessous de celle-ci. Elle se présente sous la forme d'une zone dont la surface supérieure est sensiblement plane et horizontale. Elle forme ainsi un plancher pouvant recevoir des sièges 18 (figure 2) auxquels on peut accéder grâce à des couloirs 20 (figure 2).

On retrouve ici pour la deuxième zone 12 du premier pont une structure sensiblement similaire à un pont unique d'aéronef de l'art antérieur. Toutefois, par rapport à un aéronef de l'art antérieur, l'espace dédié aux bagages et/ou marchandises est réduit au profit de l'espace disponible pour la cabine, et donc des passagers et de leur confort.

La troisième zone 14 est également une zone définissant un plancher sensiblement plan. Cette troisième zone disposée à l'arrière du fuselage 2 est par exemple disposée à la même hauteur que la première zone 10. De la sorte, la première zone 10 et la troisième zone 14 peuvent correspondre à la partie avant, respectivement à la partie arrière, d'un pont unique d'un aéronef de l'art antérieur.

Comme on peut le voir sur les dessins, au-dessus de la deuxième zone 12 se trouve une structure supérieure appelée par la suite second pont 22. Ce dernier présente globalement une forme profilée selon l'axe longitudinal (axe de roulis) de l'aéronef. Il présente globalement des zones longitudinales planes disposées à des niveaux différents et reliées entre elles par des parois verticales ou inclinées.

De même que la première zone 10 se trouve au niveau de la première porte 16, la troisième zone 14 du premier pont se trouve au niveau d'une porte arrière 21. Cette dernière correspond par exemple à une porte arrière d'un aéronef de l'art antérieur. De même que pour la première porte 16, on ne sortirait pas du cadre de l'invention en proposant une porte arrière de forme et/ou de position différente par rapport à un aéronef de l'art antérieur.

En ce qui concerne la première porte 16, de même que la porte arrière 21, il peut s'agir à chaque fois de l'unique porte représentée sur les figures. Toutefois, habituellement, en aéronautique, quand on parle d'une porte, il s'agit en fait d'une paire de portes qui sont disposées symétriquement à droite et à gauche du fuselage de l'aéronef.

La présente invention propose, de manière originale, d'accéder à la deuxième zone 12 du premier pont et au second pont 22 à l'aide de rampes rectilignes 24. De même qu'expliqué plus haut, où il est indiqué que des sièges 18 et des couloirs 20 sont prévus au niveau de la deuxième zone 12 du premier pont, on retrouve également des sièges 18 et un ou plusieurs couloirs 20 sur le second pont 22. On remarque en revanche que la première zone 10 et la troisième zone 14 sont dépourvues de sièges pour passagers entre la porte d'accès 16, 21 correspondante et les rampes 24 (il n'est pas exclu de prévoir des sièges, par exemple de type strapontin, pour le personnel navigant dans l'une de ces zones ou dans les deux) À chaque couloir 20 de la deuxième zone 12 du premier pont et à chaque couloir 20 du second pont 22 correspondent à chaque fois une rampe rectiligne 24 à l'avant et une autre à l'arrière. On retrouve ainsi des rampes rectilignes 24 reliant la première zone 10 du premier pont à la deuxième zone 12 du premier pont, des rampes rectilignes 24 reliant la première zone 10 du premier pont au second pont 22, des rampes rectilignes 24 reliant la deuxième zone 12 du premier pont à la troisième zone 14 du premier pont et des rampes rectilignes 24 reliant le second pont 22 à la troisième zone 14 du premier pont.

La longueur des rampes est choisie de manière à avoir une pente de rampe qui ne soit pas trop importante. Il faut, d'une part, que les passagers puissent gravir et descendre les rampes 24 sans difficultés et, d'autre part, que le personnel navigant puisse monter et descendre des chariots ou demi-chariots, tels ceux utilisés habituellement pour le service des repas et/ou des boissons. Les pentes des rampes seront par exemple aux alentours de 20 %, par exemple comprises en 15 et 25 %.

On prévoit ainsi de réaliser un dénivelé de l'ordre de 20 cm pour une longueur de 1 m, cette dernière longueur étant mesurée le long de l'axe longitudinal de l'aéronef. À titre d'exemples non limitatifs, on aura ainsi par exemple une rampe s'étendant sur 3 m le long de l'axe de roulis pour réaliser un dénivelé de 0,65 m ou bien une rampe de 5 m de long pour permettre un dénivelé de 1,1 m.

La présence de rampes permet d'éviter d'avoir des ascenseurs et/ou des escaliers. Elles permettent de fluidifier la circulation dans l'aéronef, le fait qu'elles soient rectilignes augmentant encore plu ce résultat. Il n'est toutefois pas exclu de prévoir un escalier ou un ascenseur dans l'aéronef. On peut même envisager par exemple une rampe pour laquelle chaque bord serait constitué de plans inclinés et le milieu de marches d'escalier.

Pour réaliser le second pont 22, et aussi éventuellement le premier pont, il est possible d'utiliser des structures moulées en carbone. De telles structures sont alors optimisées en fonction de la charge à supporter et de la forme du plancher. Un plancher réalisé de la sorte peut présenter plusieurs niveaux différents pour adapter au mieux l'espace au-dessus et en dessous du plancher. Comme on le verra plus loin, il est intéressant d'avoir par exemple au moins trois niveaux différents pour optimiser l'espace au niveau des sièges, des couloirs mais aussi des emplacements pour le rangement de bagages. On arrive avec de tels matériaux à réaliser des planchers relativement minces en intégrant par exemple des raidisseurs transverses.

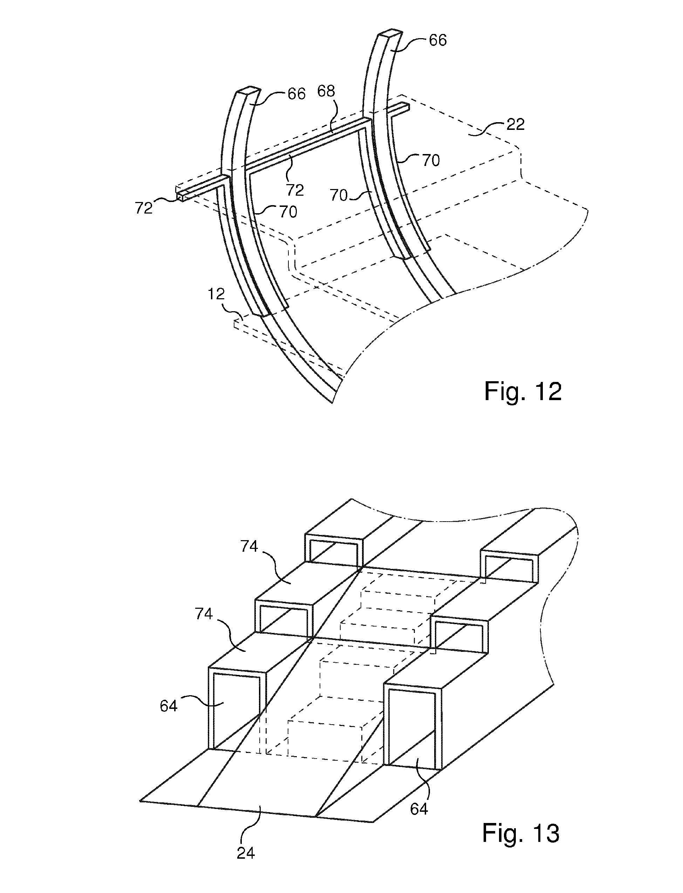

La structure du premier pont et la structure du second pont 22 s'appuient sur des cadres du fuselage et sont destinés à supporter les sièges. Il est rappelé ici que les cadres d'un fuselage sont des pièces qui forment la structure primaire d'un fuselage. Ces pièces annulaires sont reliées entre elles par des longerons et portent une peau extérieure de l'aéronef ainsi que les éléments structuraux à l'intérieur de l'aéronef. La liaison avec les cadres est par exemple réalisée pour emboîtement par appui avec une pièce intermédiaire en arc de cercle le long de la paroi du fuselage, pour supporter notamment le second pont 22. Des attaches de plancher démontables, de type boulon/écrou, en nylon ou en métal, sont avantageusement utilisées (cf. figure 12 et la description correspondante plus loin).

On peut prévoir pour réaliser le second pont 22, mais aussi le premier pont, que les pièces moulées en carbone s'étendent sur toute la largeur de la cabine dans le sens transversal et s'étendent sur deux, trois ou quatre cadres dans le sens longitudinal. Deux pièces successives formant un plancher s'emboîtent par exemple l'une dans l'autre. Pour rigidifier la structure, on peut prévoir de relier le second pont au premier pont par exemple par des pieds verticaux se trouvant au milieu de cabine. De tels pieds ne sont pas représentés. Ils peuvent être utilisés pour l'aménagement de la cabine en supportant par exemple des porte-manteaux. Ils seront de préférence disposés de telle sorte qu'ils ne viennent pas entraver les mouvements transversaux de passagers, notamment pour ne pas gêner une évacuation de la cabine.

La figure 2 représente schématiquement une coupe transversale à travers le fuselage de l'aéronef montré sur la figure 1 au niveau de la deuxième zone 12 du premier pont. À ce niveau, se trouve également le second pont 22. Dans cet exemple de section, dix passagers peuvent voyager de front et les accès aux places assises se font par trois couloirs disposés sur deux niveaux distincts.

On remarque sous le premier pont, plus précisément en dessous de la deuxième zone 12 du premier pont, la présence d'une soute 26. Comme mentionné déjà plus haut, le volume de cette soute est inférieur au volume d'une soute rencontrée sur des avions de l'art antérieur aux dimensions équivalentes. Cette soute permet tout de même de recevoir des conteneurs 28. Il s'agit par exemple de conteneurs normalisés de type LD3-45W (alors que dans un aéronef de l'art antérieur il est prévu de recevoir en soute des conteneurs normalisés de type LD1, LD2, LD3 ou LD6).

Comme déjà mentionné plus haut, la deuxième zone 12 du premier pont présente un plancher sensiblement plan. Dans la forme de réalisation représentée ici, il est proposé de disposer ici des sièges 18 disposés en rangées transversales et colonnes longitudinales, comme c'est classiquement le cas dans un aéronef pour le transport de passagers. Sur cette figure 2, il est proposé de disposer six sièges de front, ces sièges étant desservis par deux couloirs 20. On a alors du côté du fuselage 2 à chaque fois une colonne longitudinale de sièges 18 et au centre du fuselage on a deux doubles colonnes de sièges 18 séparés par un espace de rangement. On arrive ainsi à une configuration de type 1, 4, 1. Une telle configuration présente l'avantage que chaque passager peut venir s'asseoir ou peut se lever et se déplacer dans l'aéronef en ayant à s'excuser auprès d'un seul voisin maximum.

Sur le second pont 22, il est proposé ici de disposer également des sièges 18 en rangées transversales et colonnes longitudinales. Il est proposé ici de disposer quatre sièges de front desservis par un couloir 20 central. On a donc ici une configuration de type 2, 2. Dans une telle configuration, les passagers se trouvant le plus près du fuselage en position assise doivent s'excuser auprès d'un voisin lorsqu'ils veulent venir s'asseoir ou quitter leur siège (configuration appelée aussi "simple excuse-me").

Au niveau du second pont 22, la hauteur de plafond étant limitée, il est proposé de disposer le sol du couloir 20 à un niveau tel qu'il permette d'avoir par exemple une hauteur sous plafond de l'ordre de 2,10 m. Le couloir 20 se trouve ici en position médiane et est disposé au-dessus de l'espace de rangement se trouvant entre les deux doubles colonnes de sièges 18 situés dans la deuxième zone 12 du premier pont. Le fait que le sol du couloir 20 du second pont 22 soit disposé à un niveau inférieur et vienne empiéter sur l'espace en dessous du second pont 22 ne nuit pas au confort des passagers du premier pont. L'espace de rangement peut être utilisé pour disposer des meubles de rangement faisant office de coffres à bagages pour les passagers voyageant sur les sièges 18 des doubles colonnes centrales. La hauteur étant suffisante, il peut même être envisagé de créer ici des vestiaires permettant de suspendre vestes et/ou manteaux.

Le sol, en dessous des sièges 18 du second pont 22, se trouve à une altitude supérieure à celle du couloir 20. Les passagers passant du couloir vers les sièges 18 sur le second pont 22 doivent ainsi franchir une petite marche 30, qui de préférence n'excède pas 0,60m de haut. En l'exemple illustré, elle ne mesure que quelques centimètres. On notera que chacune des zones longitudinales s'étendant de part et d'autre du couloir central 20 est plane ; en d'autres termes, le sol sous chaque double colonne de sièges 18 est plan, contrairement à ce qui est proposé dans US2002/0033432 où chaque zone de sièges présente un sol complexe dont le niveau varie selon la direction longitudinale. L'absence de différence de niveaux selon la direction longitudinale dans le second pont selon l'invention au niveau des zones de sièges permet d'utiliser des sièges classiques, sur pieds. L'espace libre sous un tel siège sert à loger un gilet de sauvetage ainsi que les pieds (et éventuellement un sac à main) du passager assis juste derrière. Dans US2002/0033432, l'espace situé sous l'assise de chaque siège du pont supérieur n'est pas disponible pour les usagers desdits sièges ; il est récupéré pour augmenter la hauteur sous plafond du pont inférieur entre les rangées de sièges, ce qui s'avère peu utile. La configuration selon l'invention avec des zones longitudinales, notamment des zones de sièges, planes permet d'optimiser l'utilisation de l'espace dans la cabine.

Entre les sièges 18 du second pont 22 et le fuselage 2, il est proposé dans la forme de réalisation de la figure 2 de disposer le second pont 22 à environ 0,50 m au-dessus du niveau du sol de la zone de sièges 18 voisine. Le second pont 22 s'étend par exemple sensiblement à hauteur des assises des sièges 18. Comme illustré sur la figure 2, cette position permet de prévoir sous le second pont la présence de coffres à bagages 32 et sur le second pont 22, entre les sièges 18 et le fuselage 2, de rangements 34 pour bagages. Des étagères 36 peuvent être prévues également au-dessus des sièges 18 du second pont 22 pour recevoir par exemple des vêtements et/ou petits colis.

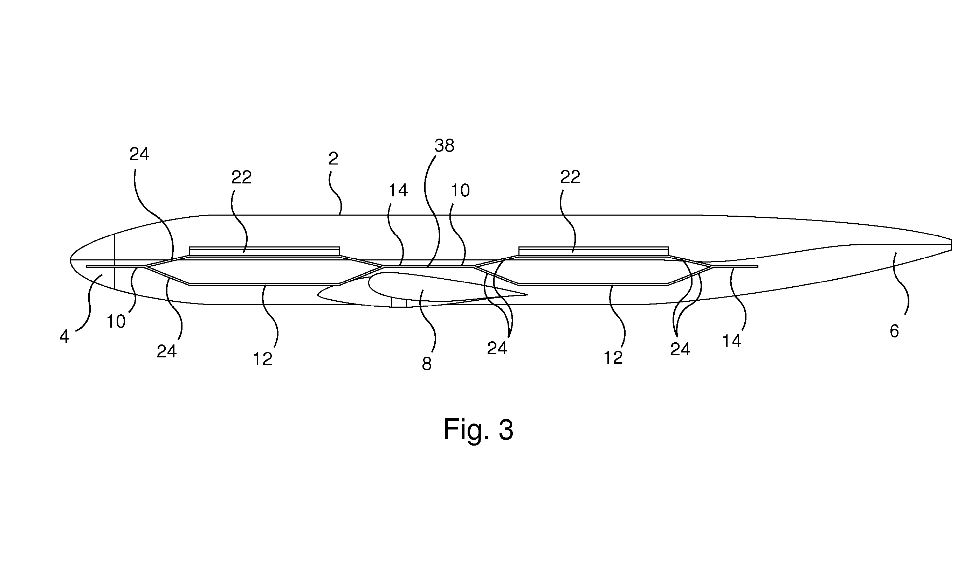

La figure 3 montre en vue de côté un fuselage d'aéronef long courrier de plus grande taille que l'aéronef représenté sur les figures 1 et 2. On reprend ici les mêmes références que celles utilisées précédemment pour désigner des éléments similaires. On retrouve donc ici à l'avant du fuselage 2 un cockpit 4 et à l'arrière de ce fuselage 2 un cône arrière 6. On a ici une voilure 8 plus importante que dans la forme de réalisation des figures 1 et 2. De ce fait, la deuxième zone 12 telle que décrite précédemment ne peut pas s'étendre au niveau de la voilure 8. Il est alors proposé d'avoir un second pont 22 en avant de la voilure 8 et en arrière de celle-ci. On retrouve ici en avant de la voilure et en arrière de celle-ci à chaque fois une configuration tout à fait similaire à celle décrite précédemment. Le premier pont présente alors ici deux premières zones 10 : une se trouvant juste en arrière du cockpit 4 et l'autre au-dessus de la voilure 8, à l'arrière de celle-ci. On retrouve également deux deuxièmes zones 12, une en avant de la voilure 8 et l'autre en arrière de celle-ci. De même, deux troisièmes zones 14 sont prévues, une au-dessus de la voilure 8, en avant de celle-ci, et l'autre à proximité du cône arrière 6. La troisième zone 14 et la première zone 10 se trouvant au-dessus de la voilure 8 sont confondues en une zone appelée par la suite plateau intermédiaire 38.

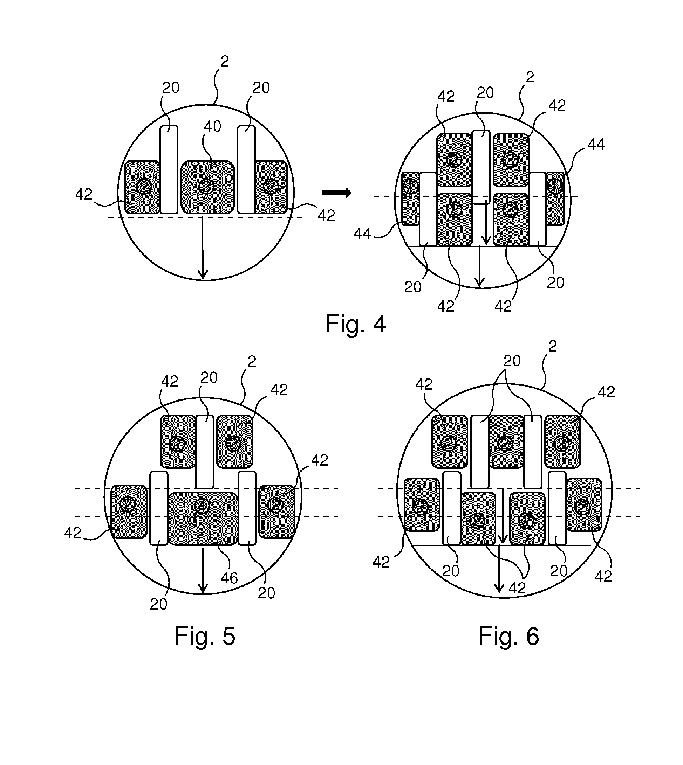

La figure 4 illustre la présente invention en comparant une configuration classique dans un aéronef de l'art antérieur (sept passagers de front et deux couloirs sur un pont) avec une variante de la configuration proposée sur la figure 2 (dix passagers de front et trois couloirs sur deux ponts). Dans les deux cas, on a un aéronef présentant un fuselage sensiblement cylindrique circulaire d'un diamètre de l'ordre de 5 m. Sur la gauche de la figure 4, dans une configuration bi-couloir, on trouve au centre un ensemble 40 de trois colonnes de sièges. Latéralement, du côté du fuselage 2, on trouve de chaque côté un ensemble 42 de deux colonnes de sièges. Un couloir 20 sépare à chaque fois l'ensemble 40 de trois colonnes de sièges d'un ensemble 42 de deux colonnes de sièges. Dans cette configuration, l'aéronef peut emporter dans sa soute 26, en dessous du pont unique, une paire de conteneurs de type LD2.

Sur la droite de la figure 4, on a représenté schématiquement une section de fuselage d'un aéronef selon la présente invention, ledit aéronef présentant un fuselage 2 sensiblement cylindrique circulaire d'un diamètre de 5 m. Cette configuration représente celle décrite en référence à la figure 2 mais illustrée plus schématiquement et avec une variante. On remarque que l'on a ici quatre ensembles 42 de deux sièges. En outre, on a également deux colonnes 44 d'un siège. Par rapport à la forme de réalisation de la figure 2, les sièges des colonnes 44 sont surélevés de manière à disposer les passagers prenant place sur ces sièges au niveau du fuselage où sa largeur est la plus importante. De la sorte, le confort des passagers est amélioré. On arrive ainsi à disposer dix sièges de front dans la même section de fuselage avec un confort tout à fait équivalent. Certes la soute 26 est de taille réduite mais, comme indiqué plus haut, elle permet tout de même de loger des conteneurs normalisés de type LD3-45W. Le plancher du second pont 22 présente une forme adaptée pour laisser suffisamment de place aux passagers s'asseyant sur les sièges des colonnes 44. La forme de ce plancher est adaptée pour optimiser à la fois l'espace au niveau du premier pont et du second pont.

Les figures 5 et 6 présentent des configurations envisageables pour les aéronefs présentant un diamètre de fuselage plus important. La figure 5 illustre ainsi une configuration pour un fuselage présentant par exemple un diamètre de l'ordre de 5,60 m. On arrive ici à loger douze passagers de front sur deux ponts. Dans la configuration représentée, il est proposé d'avoir huit passagers de front au niveau de la deuxième zone 12 du premier pont et quatre passagers de front sur le second pont. Sur le premier pont, les passagers sont répartis selon une configuration 2, 4, 2. On a alors au centre un ensemble 46 de quatre colonnes de sièges disposé entre deux ensembles 42 de deux colonnes de sièges, un couloir 20 séparant à chaque fois l'ensemble 46 de quatre colonnes de sièges d'un ensemble 42 de deux colonnes de sièges. Sur le second pont 22, on a deux ensembles 42 de deux colonnes de sièges séparés par un couloir 20.

Sur la figure 6, le diamètre du fuselage est par exemple de 6,10 m. On arrive alors à loger quatorze passagers de front dans cette section de fuselage. Tous les sièges sont disposés selon des ensembles 42 de deux colonnes de sièges. Sur le premier pont, au niveau de la deuxième zone 12, on a deux ensembles 42 de deux colonnes de sièges séparés à chaque fois par un couloir 20. Entre les deux ensembles 42 se trouvant au centre du premier pont, un espace de rangement peut être prévu comme l'espace correspondant décrit en référence à la figure 2. On remarque que les deux ensembles 42 latéraux, se trouvant le plus près du fuselage, sont surélevés par rapport aux deux ensembles 42 centraux. Le plancher du premier pont peut ici être plat ou bien être lui aussi surélevé sous les sièges correspondants. De préférence, les marches créées dans le deuxième cas n'excèdent pas 0,60m de hauteur. De la sorte, les deux ensembles 42 latéraux se trouvent plus près de la zone de largeur maximale de la cabine et les passagers bénéficient ainsi de plus d'espace.

En reprenant l'enseignement de la présente invention, on peut pour d'autres diamètres de fuselage obtenir des configurations autres. On peut ainsi avoir par exemple seize passagers de front sur deux ponts avec un diamètre de fuselage de 6,6 m ou encore des variantes à onze, treize, quinze, dix-sept, ou dix-huit passagers de front sur deux ponts avec trois ou quatre couloirs. Les ensembles de colonnes de sièges peuvent comprendre de une à six colonnes de sièges.

Dans chacune des configurations illustrées à titre d'exemples non limitatifs sur les figures, notamment sur les figures 4 (figure de droite) à figure 6, la forme du plancher du second pont s'adapte et peut présenter de nombreux niveaux différents (suivant la direction transversale) de manière à optimiser l'espace au niveau des couloirs 20, des sièges mais aussi des espaces de rangement pour les bagages (à chaque fois tant au niveau du premier pont que du second).

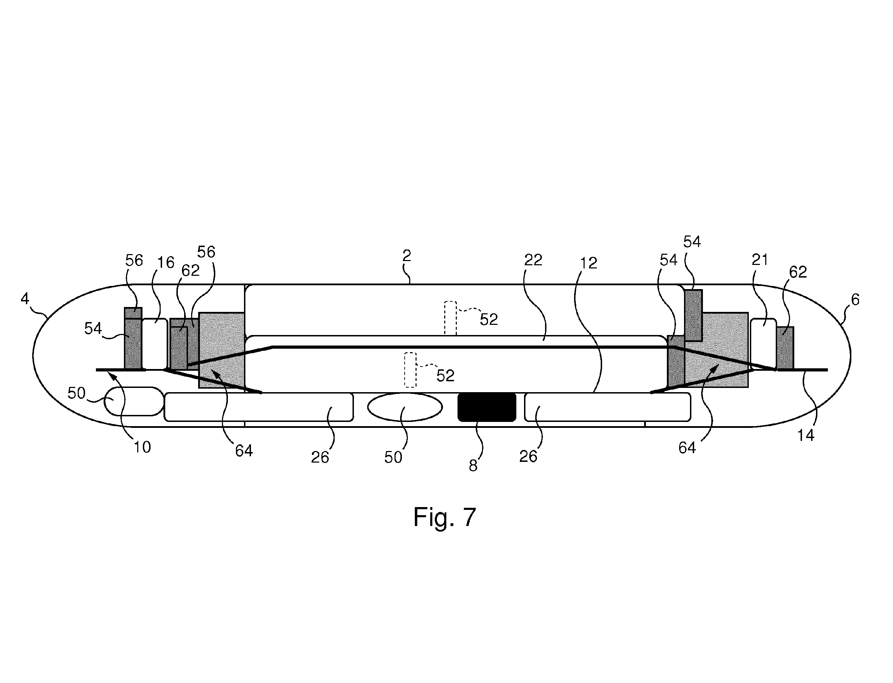

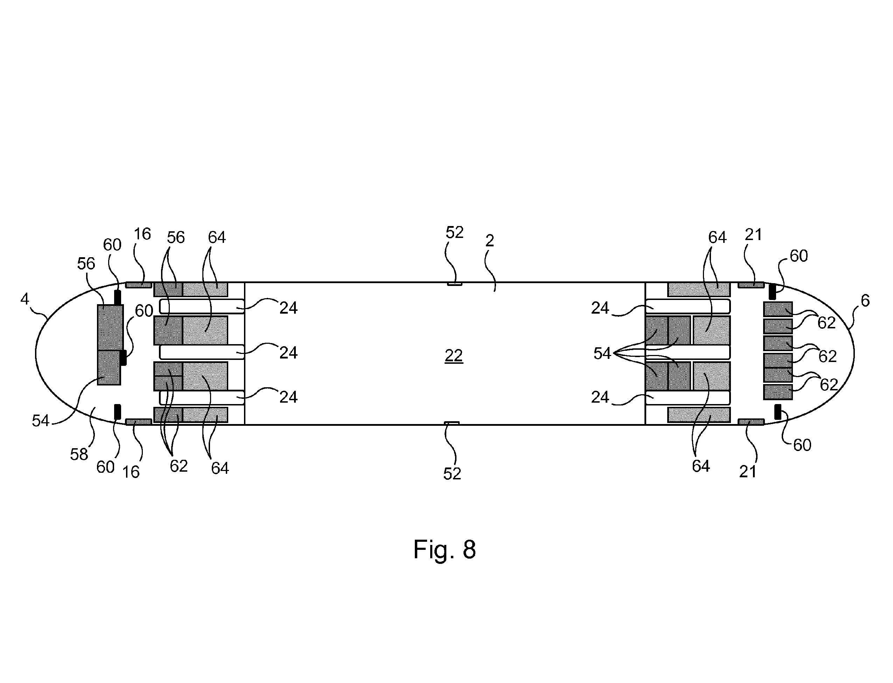

Les figures 7 et 8 illustrent schématiquement en vue de côté et en vue de dessus un aménagement possible pour un aéronef selon la présente invention. On a repris ici un aéronef de type moyen courrier tel celui représenté sur les figures 1 et 2. Dans un aéronef long courrier, tel celui illustré sur la figure 3, on pourrait avoir deux fois un aménagement similaire à celui représenté sur les figures 7 et 8, un aménagement similaire étant disposé en avant de la voilure et l'autre en arrière de celle-ci.

Les figures 7 et 8 sont prévues pour illustrer l'aménagement au niveau des rampes rectilignes 24, l'aménagement au niveau de la deuxième zone 12 et du second pont 22 ayant été décrit précédemment.

Dans la partie inférieure du fuselage 2, on a représenté sur la figure 7, outre la voilure 8, ou plus précisément le raccordement de celle-ci au fuselage, des soutes 26 (une soute avant et une soute arrière) et également des logements 50 pour recevoir des trains d'atterrissage.

Au niveau de la cabine, on retrouve la première porte 16 et la porte arrière 21. En pointillés, on a représenté des portes intermédiaires 52. La présence de telles portes est nécessaire si la distance entre la première porte 16 et la porte arrière 21 est supérieure à 60 pieds (soit environ 18,29 m).

À l'avant de l'aéronef, on peut prévoir, de manière classique, derrière le cockpit 4, une toilette 54 et un espace 56 permettant de stocker de la nourriture et des boissons et de préparer éventuellement des repas, un tel espace 56 étant généralement appelé galley.

La figure 7 permet de repérer l'emplacement des différents éléments décrits dans la longueur de l'aéronef et également en hauteur. La figure 8 permet quant à elle de repérer le positionnement des éléments décrits par rapport à la longueur de l'aéronef et dans la largeur de celui-ci. On voit ainsi notamment que la toilette 54 et le galley 56 se trouvant juste derrière le cockpit 4 sont accolés l'un à l'autre. La figure 8 illustre ainsi également un couloir 58 d'accès au cockpit. On a également représenté sur cette figure 8 les emplacements de sièges 60 (strapontins) prévus pour le personnel navigant commercial et utilisés notamment lors des phases de décollage et d'atterrissage de l'aéronef. Juste en arrière de la première porte 16, se trouvent, du côté gauche de l'aéronef, c'est-à-dire du côté par lequel embarquent et débarquent habituellement les passagers, des emplacements 62 aménagés plus particulièrement pour recevoir des personnes handicapées se déplaçant en fauteuils. Ces emplacements 62 peuvent être équipés pour réaliser un arrimage d'un fauteuil roulant. Ceci permet alors à une personne handicapée de voyager sur son propre fauteuil roulant sans avoir à être transférer de son fauteuil vers un siège lors de l'embarquement (et du siège vers son fauteuil lors du débarquement). Les rampes 24 peuvent débuter juste en arrière de la première porte 16 et les galleys 56 correspondants, de même que les emplacements 62, peuvent se trouver au moins partiellement au même niveau (mesuré le long de l'axe de roulis de l'aéronef) que les rampes 24.

En arrière des galleys 56 et des emplacements 62, il est par exemple prévu de disposer des casiers à bagages 64. Ces derniers pourront accueillir des bagages hors gabarit qui, dans les aéronefs de l'art antérieur, sont prévus pour voyager dans la soute de l'aéronef. La présence de tels casiers à bagages permet de compenser ainsi la diminution du volume de la soute de l'aéronef. À la place de ces casiers, il peut aussi être envisagé de disposer des sièges supplémentaires au niveau des rampes.

À l'arrière de l'aéronef, on peut par exemple prévoir des toilettes 54 pour les passagers. Des toilettes 54 sont prévues pour les passagers voyageant sur la deuxième zone 12 du premier pont et d'autres pour les passagers voyageant sur le second pont 22. Ces toilettes 54 peuvent être disposées avec un décalage en hauteur et un chevauchement comme illustré notamment sur la figure 7. L'accès aux toilettes 54 peut se faire soit à partir du second pont 22 ou de la deuxième zone 12, soit depuis les rampes 24 correspondantes.

Il est également prévu, au niveau des rampes 24, à l'arrière de l'aéronef, de disposer d'autres casiers à bagages 64 pour recevoir notamment des bagages encombrants (ou bien des sièges, non représentés).

En arrière de la porte arrière 21, des emplacements 62 peuvent être prévus pour recevoir des personnes handicapées. Il peut être également prévu à cet endroit un espace pour recevoir des galleys, des espaces de rangement, un bar, ... ou même du fret. Des sièges peuvent également être disposés à cet endroit. Ils présentent l'avantage que les passagers installés sur ces sièges bénéficient devant eux d'un espace libre important (beaucoup de place pour les jambes). De telles places pourraient par exemple être attribuées prioritairement à des familles avec enfants.

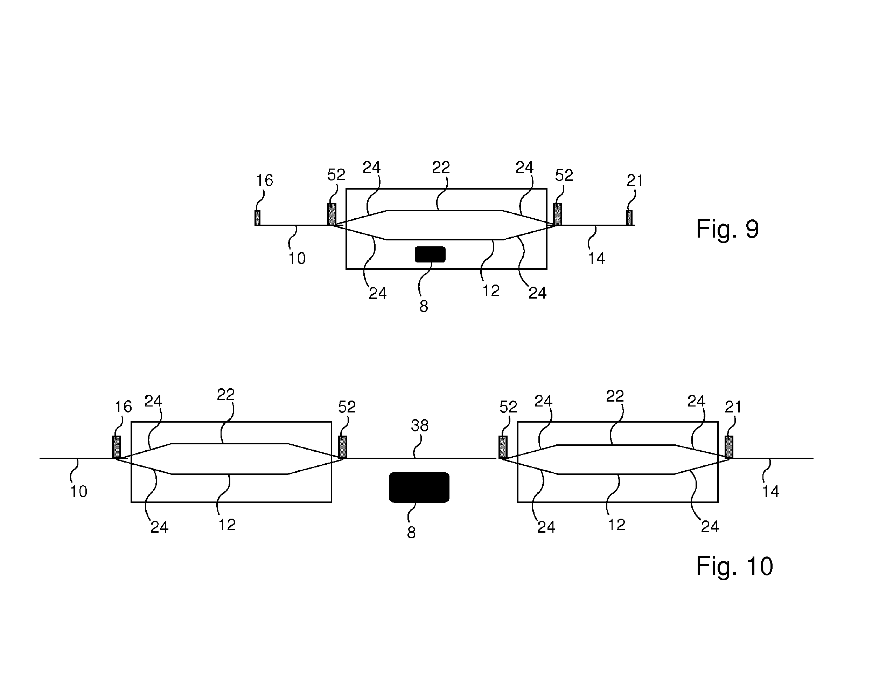

La figure 9 illustre schématiquement une variante de réalisation de l'invention. La représentation est ici une vue très schématique de côté d'un aéronef moyen courrier. On a représenté ici la voilure 8, et diverses portes de l'aéronef. Dans cet exemple, il a été choisi de s'adapter à une structure d'aéronef existante dans laquelle toutes les portes sont disposées au niveau d'un pont unique. Dans cette forme de réalisation, on reprend une configuration telle que décrite plus haut. Celle-ci est adaptée de la manière suivante : on dispose la première zone 10 du premier pont entre la première porte 16 et une première porte intermédiaire 52. Entre cette première porte intermédiaire 52 et une seconde porte intermédiaire 52, se trouvent la deuxième zone 12 du premier pont ainsi qu'un second pont 22 et les rampes 24 correspondantes. Entre la seconde porte intermédiaire 52 et la porte arrière 21, se trouve la troisième zone 14 du premier pont. La première zone 10 et la troisième zone 14 sont ici avantageusement aménagées pour recevoir des passagers et comportent donc des sièges correspondants. Selon le diamètre du fuselage et les sièges choisis, on peut avoir un nombre variable de passagers dans les différentes zones de l'aéronef. En tenant compte des normes de sécurité, concernant notamment l'évacuation d'un aéronef, il est possible d'accueillir un maximum de 440 passagers répartis, en prévoyant à chaque fois au maximum 110 passagers, au niveau de la première zone 10, au niveau de la deuxième zone 12, de la troisième zone 14 et au niveau du second pont 22. Une telle configuration nécessite la présence de quatre paires d'issues de type A.

La figure 10 est une vue similaire à la vue de la figure 9 pour un aéronef long courrier présentant une voilure 8 plus importante. On a ici également quatre portes dans la configuration représentée. On peut prévoir 110 passagers au niveau de chacun des seconds ponts 22 et 110 autres passagers au niveau de chacune des deuxièmes zones 12. On prévoit également d'installer au plus 110 passagers sur le plateau intermédiaire 38 avec par exemple une cinquième porte (de type A) au niveau de ce plateau. Si non, comme illustré sur la figure 10, l'espace 38 peut être utilisé pour des servitudes. On arrive ainsi à un nombre maximum de passagers pour une telle configuration de 550 passagers (avec cinq portes).

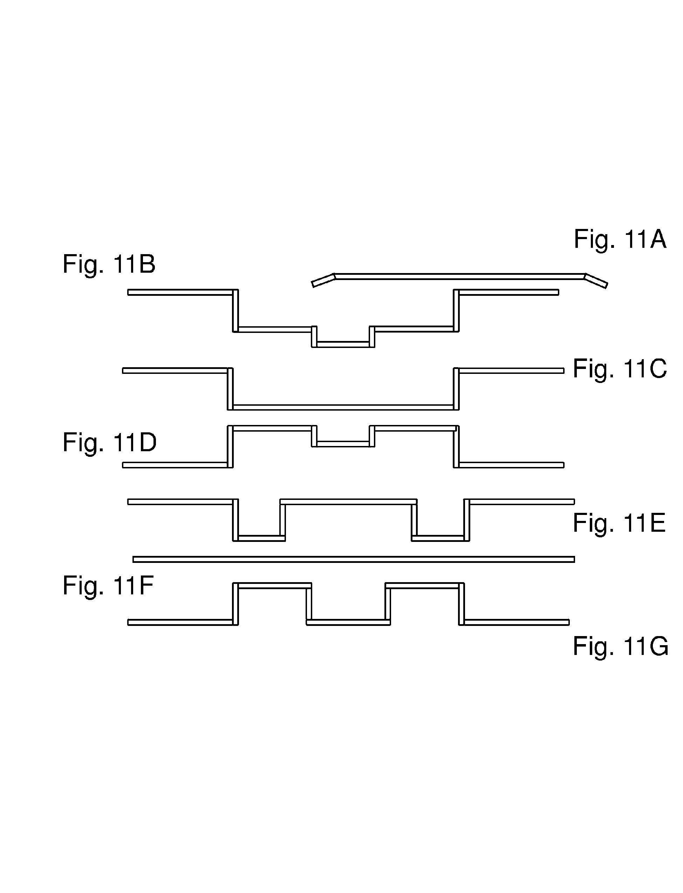

Enfin, la figure 11 illustre la grande variété de formes que peuvent prendre les planchers notamment au niveau du second pont 22. Comme indiqué plus haut, ces planchers sont de préférence réalisés par moulage d'une matière composite à base de carbone. La pièce moulée présente une forme profilée et les sections transversales de cette forme profilée sont montrées sur les figures 11A à 11 G. Les figures 11A et 11F correspondent à des ponts sensiblement plans. On reconnaît par exemple sur la figure 11B la section profilée du second pont de la figure 2. Ces diverses formes sont données uniquement à titre d'exemples afin d'illustrer que la présente invention peut s'adapter à de nombreuses configurations et est donc d'une grande modularité, et ne sont pas exhaustives.

La figure 12 illustre comment un plancher tel ceux illustrés sur les figures 11A à 11G peuvent prendre place dans l'aéronef. On reconnaît sur cette figure 12 deux cadres 66 successifs. Comme le sait l'homme du métier, la structure primaire d'un aéronef présente des cadres annulaires reliés par des longerons qui forment ainsi la "charpente" de l'aéronef sur laquelle est fixée la peau extérieure et qui porte toutes les structures à l'intérieur du fuselage.

La deuxième zone 12 du premier pont est par exemple montée sur les cadres 66 de manière classique, en utilisant par exemple des traverses (non représentées). Il est proposé ici de faire reposer le plancher du second pont 22 sur le premier pont comme illustré sur la figure 12. Pour plus de clarté, les planchers correspondant au premier pont et au second pont sont représentés en pointillés sur cette figure 12.

Le plancher du second pont 22 vient reposer sur des étriers de support 68 qui forment des pièces intermédiaires entre le premier pont et le second pont. Chaque étrier de support 68 présente deux branches 70 qui s'étendent chacune le long d'un cadre 66, en étant fixé à celui-ci et en reprenant sa forme de manière à bien intégrer les branches 70 à la structure de l'aéronef. L'extrémité libre de chaque branche 70 vient reposer sur le plancher correspondant à la deuxième zone 12 du premier pont et est fixé par exemple à l'aide d'un sabot -non représenté-. Les deux branches 70 sont reliées entre elles par une base 72 qui forme le support proprement dit du plancher du second pont 22. La base 72 vient s'étendre longitudinalement entre deux cadres 66 successifs et forme ainsi un palier sur lequel un bord du plancher du second pont 22 vient reposer. Les planchers du second pont sont ainsi supportés longitudinalement. Le maintien transversal est assuré par le plancher lui-même. Ce plancher est réalisé en tronçons s'étendant par exemple chacun sur deux ou trois cadres et chaque tronçon vient s'emboîter dans le tronçon voisin de manière à réaliser un maintien transversal mutuel.

La figure 13 illustre un élément de forme complexe, pouvant être moulé dans le même matériau que les planchers du second pont 22 pour réaliser une rampe 24 et un aménagement autour de celle-ci, comportant par exemple des casiers à bagages 64. Dans la forme de réalisation de la figure 13, des casiers à bagages 64 sont prévus de part et d'autre d'une rampe 24. Des traits en pointillés illustrent qu'il peut être envisagé d'avoir par exemple un escalier sur une largeur donnée associé à une rampe voisine. L'ouverture des casiers à bagages 64 est ici telle que les bagages sont introduits longitudinalement (par rapport à la direction de déplacement de l'aéronef) dans les casiers. On pourrait en variante prévoir une ouverture latérale des casiers à bagages 64 de manière à prévoir une introduction transversale des bagages dans ceux-ci. La face supérieure 74 des casiers pourrait alors par exemple être utilisée pour recevoir un siège, ou bien un espace de rangement pour manteaux, un présentoir, ....

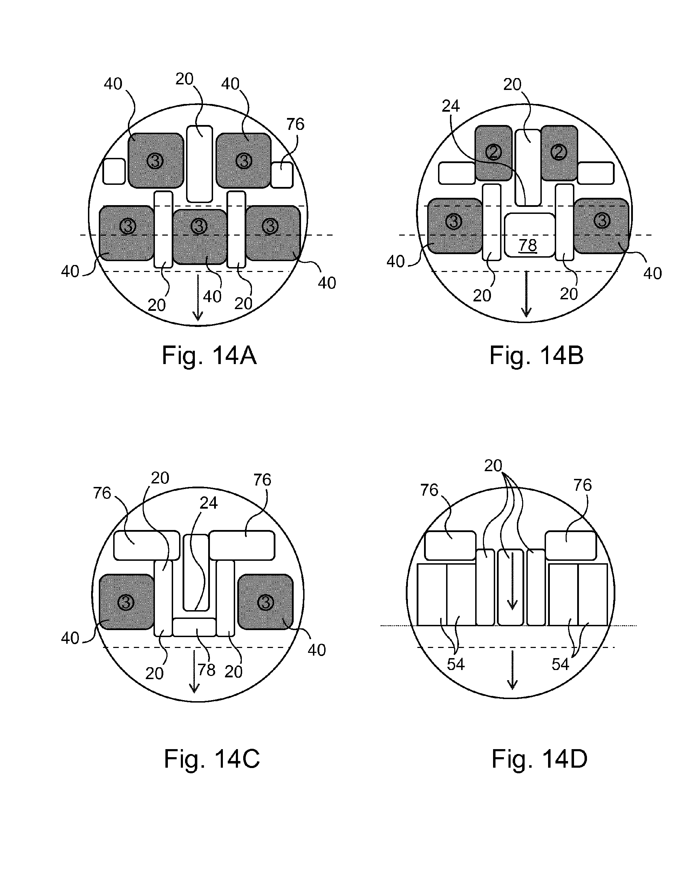

Les figures 14A à 14D illustrent des sections de fuselage d'un aéronef pouvant transporter quinze passagers de front sur deux niveaux avec trois passages d'accès, ou couloirs 20, autour des rampes 24 dans un aéronef dont le fuselage présente par exemple une hauteur de 6,1 m et une largeur de 6,0 m.

La figure 14A correspond à une coupe transversale en haut d'une rampe 24 ou bien dans une portion de fuselage comportant un second pont 22. Au niveau du premier pont, trois ensembles 40 de trois colonnes de sièges sont répartis et deux couloirs 20 séparent deux à deux les ensembles 40. Au niveau du second pont, deux ensembles 40 de trois colonnes de sièges sont séparés par un couloir 20. Latéralement, des espaces de rangement 76 permettent d'accueillir des bagages des passagers voyageant sur le pont supérieur.

La figure 14B est une coupe réalisée au niveau d'une rampe 24, par exemple à 1 m de l'extrémité supérieure de la rampe 24 permettant l'accès au second pont 22. Dans cette zone, le fuselage de l'aéronef se réduit légèrement et il est prévu de n'avoir plus que dix passagers de front. Sur le pont inférieur, du fait de la rampe 24 il n'est plus possible d'accueillir confortablement des passagers au centre du fuselage. L'espace disponible sous la rampe 24 est alors mis à profit pour réaliser un coffre de rangement 78 afin d'accueillir notamment des bagages de passagers voyageant dans la deuxième zone 12 du premier pont. Les ensembles 40 latéraux du pont inférieur ne sont pas impactés par la rampe et accueillent donc encore trois passagers de front. Au niveau supérieur, du fait notamment du rétrécissement des dimensions du fuselage, deux passagers voyagent de front de part et d'autre de la rampe. L'espace de rangement 76 latéral peut quant à lui de ce fait être augmenté.

En descendant encore la rampe d'accès au second pont (figure 14C), 1,6 mètre plus loin, les places pour passagers au niveau supérieur ont disparu car il n'est plus possible d'y accéder mais l'espace est mis à profit pour agrandir encore l'espace de rangement 76. Au niveau inférieur, la configuration reste semblable mais la hauteur du coffre de rangement 78 s'amenuise.

Au bas de la rampe d'accès au second pont (figure 14D), il est choisi de ne plus faire voyager de passagers mais d'utiliser l'espace pour le rangement de chariots ou la réalisation de toilettes 54. L'espace de rangement 76 se prolonge alors avantageusement au-dessus des chariots ou bien des toilettes 54.

Comme il ressort de la description qui précède, la présente invention permet, par rapport à un fuselage de l'art antérieur, pour un même diamètre ou une section équivalente, sur une même longueur donnée, de loger un plus grand nombre de passagers sans pour autant le faire au détriment du confort de ceux-ci. La présente invention s'adapte également à la structure de l'aéronef (voilure, position des portes, etc.).

En ce qui concerne le confort des passagers, par exemple en classe économique, on peut prévoir des sièges présentant une largeur de l'ordre de 0,5 m disposés dans le sens longitudinal avec un pas de 0,8 m à 0,85 m avec 1,50 m de marge verticale. Les couloirs quant à eux ont une largeur par exemple de 0,5 m et une hauteur au moins égale à 2 m. La forme complexe notamment du second pont permet de garantir ces diverses valeurs pour tous les sièges et au niveau de tous les couloirs.

Les diverses solutions proposées dans la description qui précède et sur les dessins ci-joints, permettent à chaque passager, lorsqu'il est assis, d'avoir à s'excuser auprès d'au plus un voisin pour pouvoir quitter son siège (pas de "double excuse-me"). Sur ce point, les configurations proposées sont plus confortables que la plupart des configurations proposées dans les aéronefs de l'art antérieur.

L'homme du métier aura également remarqué que beaucoup d'espace est disponible dans la cabine pour accueillir les bagages des passagers. Dans les configurations représentées sur les dessins, on peut garantir à chaque passager d'avoir assez de place pour loger une valise à roulettes standard, appelée couramment roller case, de 115 ou 125 cm. Des espaces de rangement supplémentaires sont également prévus. Ceci permet d'améliorer également le confort des passagers qui peuvent emporter plus de bagages avec eux en cabine et n'ont donc plus à les déposer avant l'embarquement pour les enregistrer en soute. Pour les petits sacs, sacs à main, vêtements, etc., il est possible de prévoir des solutions. La description ci-dessus prévoit des étagères 36 mais également des espaces de rangement 48. Les casiers à bagages 64 quant à eux sont prévus pour des bagages de plus grande taille, qui peuvent aussi éventuellement voyager en soute.

L'espace au niveau des rampes n'est pas un espace perdu. Des volumes importants disponibles autour des rampes rectilignes peuvent être utilisés, comme indiqué plus haut, pour des toilettes, le rangement de chariots et/ou de bagages. Il pourrait également être utilisé pour recevoir des sièges supplémentaires.

Lorsque l'aéronef est en escale à un aéroport, le service au sol est le même que pour un aéronef à pont unique de l'art antérieur. Les passagers embarquent et débarquent à l'avant gauche de l'aéronef. Si l'aéronef stationne sur un poste au large, des escaliers peuvent être prévus à l'avant et à l'arrière gauche de l'aéronef. L'accès pour des véhicules de commissariat ou de nettoyage, le chargement des soutes sont quant à eux réalisés à droite de l'aéronef.

La solution proposée par la présente invention permet un flux de passagers beaucoup plus efficace qu'avec un aéronef mono pont à deux (ou trois) couloirs. En effet, au niveau des zones dans lesquelles il y a deux ponts, le flux de passagers est optimisé permettant une circulation plus fluide des passagers (plus grand nombre de couloirs disponibles). En outre, la présente invention permet, pour un nombre de passagers donnés, d'avoir une cabine relativement courte. Une telle structure -courte- permet par exemple de regrouper les chariots à l'avant de la cabine et les toilettes à l'arrière de celle-ci.

Comme il ressort de la description qui précède, la présente invention permet également l'accueil de passagers handicapés ou d'enfants non accompagnés (appelés couramment UM) dans de bonnes conditions et à proximité du personnel navigant. Une zone privilégiée peut être prévue pour ces voyageurs.

En ce qui concerne encore la circulation, la pente des rampes est compatible avec une montée ou une descente aisée et en toute sécurité des passagers, soit en mode d'embarquement et débarquement normal, soit lors d'une évacuation de l'aéronef.

Le concept proposé ci-dessus est plus particulièrement adapté à des aéronefs présentant un fuselage court. Il permet en effet de faire voyager 250 passagers dans un aéronef d'environ 39 m de long (correspondant à la longueur d'un aéronef commercialisé sous la marque A320). La configuration innovante proposée permet de rendre l'aéronef compatible avec les aménagements des divers aéroports actuels tout en minimisant le temps d'escale et tout en limitant la surface du poste de stationnement. Bien entendu, le concept proposé peut également être utilisé pour des aéronefs de plus grands gabarits, comme illustré sur les dessins avec toutefois toujours un souci de compacité.

En ce qui concerne les capacités de l'aéronef, il peut être envisagé avec la présente invention d'avoir les caractéristiques décrites ci-après.

Pour une section permettant de faire voyager dix passagers de front, et avec une distance entre deux portes principales de 18 m, une longueur des rampes de 3 m (une rampe -ou plusieurs- à l'avant et une rampe -ou plusieurs- à l'arrière) et sans avoir à prévoir des issues supplémentaires, la capacité en nombre de sièges (classe économique, pas de 32 pouces entre deux sièges) est alors de 170 sièges si l'on compte en outre dix sièges au niveau de chaque rampe (soit vingt sièges), le tout pouvant être réalisé dans un fuselage de 32 m.

En prévoyant des issues supplémentaires, toujours pour dix passagers de front, mais avec 25 m entre les portes principales, avec des rampes de 3 m de long, il est possible de faire voyager 260 passagers dans un fuselage de 39 m de long avec dix passagers au niveau des rampes avant et dix au niveau des rampes arrière.

Pour un aéronef présentant un fuselage de plus grand diamètre, permettant de faire voyager quatorze passagers de front, il est possible avec une longueur de fuselage de 39 m de faire voyager 316 passagers (en classe économique, pas de 32 pouces entre deux sièges) et en logeant 22 passagers au niveau des rampes avant et 22 au niveau des rampes arrière (rampes de 4 m). Une configuration avec seize passagers de front permet de faire voyager 344 passagers assis dans un fuselage de 39 m de long.

Bien entendu, la présente invention ne se limite pas aux diverses formes de réalisation décrites ci-dessus à titre d'exemples et aux variantes évoquées. Elle concerne également toutes les formes de réalisation à la portée de l'homme du métier dans le cadre des revendications ci-après.

## Revendications

1. Cabine d'aéronef permettant d'accueillir des passagers, comportant un premier pont pour la réception de passagers, un second pont (22) pour la réception de passagers, superposé au premier pont, ainsi qu'au moins une porte d'accès (16, 21),
**caractérisée en ce que** le premier pont présente au moins une première zone (10) présentant un plancher sensiblement plan et se trouvant au niveau d'une porte d'accès (16) et au moins une seconde zone (12) présentant un plancher décalé en hauteur par rapport à la première zone (10),
et **en ce que** au moins une rampe (24) rectiligne relie la première zone (10) du premier pont à la seconde zone (12) du premier pont, et au moins une rampe (24) rectiligne relie la première zone (10) du premier pont au second pont (22).

2. Cabine d'aéronef selon la revendication 1, **caractérisé en ce que** la première zone (10) du premier pont est dépourvue de siège pour passager entre la porte d'accès (16) et les rampes (24) partant de ladite zone.

3. Cabine d'aéronef selon l'une des revendications précédentes, **caractérisée en ce que** chaque rampe (24) présente une pente comprise entre 10% et 30%.

4. Cabine d'aéronef selon l'une des revendications précédentes, délimitée par un fuselage, **caractérisée en ce que** la seconde zone (12) du premier pont et le second pont comportent des colonnes de sièges contre le fuselage.

5. Cabine d'aéronef selon l'une des revendications précédentes, **caractérisé en ce que** la seconde zone (12) du premier pont comporte deux couloirs (20) séparant chacun une zone latérale de sièges et une zone centrale de sièges.

6. Cabine d'aéronef selon l'une des revendications précédentes, **caractérisée en ce que** le premier pont présente une troisième zone (14) présentant un plancher sensiblement plan se trouvant décalé en hauteur par rapport à la seconde zone (12) du premier pont.

7. Cabine d'aéronef selon la revendication 6, **caractérisée en ce que** la troisième zone (14) et la première zone (10) se trouvent toutes deux sensiblement à un même niveau.

8. Cabine d'aéronef selon l'une des revendications 1 à 7, **caractérisée en ce que** le second pont (22) présente une structure de plancher présentant une forme profilée complexe avec différentes zones longitudinales, s'étendant longitudinalement, disposées à des niveaux différents, ces zones longitudinales étant planes et reliées par des parois sensiblement verticales.

9. Cabine selon la revendication 8, **caractérisée en ce que** la différence de niveau entre une zone longitudinale formant un couloir et une zone longitudinale contiguë recevant des sièges est inférieure à 0,60m.

10. Cabine d'aéronef selon la revendication 8 ou 9, **caractérisé en ce que** la structure de plancher du second pont est une structure moulée réalisée dans un matériau composite à base de carbone.

11. Cabine d'aéronef selon l'une des revendications 8 à 10, **caractérisé en ce que** le second pont repose sur des pièces intermédiaires disposées latéralement et venant en appui sur le premier pont.

12. Cabine d'aéronef selon l'une des revendications 8 à 11, **caractérisée en ce que** le plancher présentant une forme profilée complexe présente au moins trois zones longitudinales avec chacune un niveau différent de celui d'une autre zone considérée.

13. Cabine d'aéronef selon l'une des revendications 8 à 12, **caractérisée en ce que** le plancher ayant une forme profilée complexe présente des raidisseurs transverses.

14. Cabine d'aéronef selon l'une des revendications 1 à 13, **caractérisée en ce que** la hauteur disponible entre la seconde zone (12) du premier pont et le second pont (22) est comprise entre 1,20 m et 2,20 m.

15. Cabine d'aéronef selon l'une des revendications 1 à 14, **caractérisée en ce que** la deuxième zone (12) du premier pont présente un plancher sensiblement plan.

16. Aéronef destiné au transport de passagers, **caractérisé en ce qu'il** comporte une cabine d'aéronef selon l'une des revendications 1 à 15

17. Aéronef selon la revendication 16, **caractérisé en ce que** le premier pont présente une troisième zone (14) présentant un plancher sensiblement plan se trouvant décalé en hauteur par rapport à la seconde zone (12) du premier pont, et **en ce que** la troisième zone (14) se situe à l'arrière de l'aéronef.

18. Aéronef selon l'une des revendications 16 ou 17, **caractérisé en ce que** l'aéronef comporte une voilure (8), **en ce que** le premier pont présente une troisième zone (14) présentant un plancher sensiblement plan se trouvant décalé en hauteur par rapport à la seconde zone (12) du premier pont, et **en ce que** la troisième zone (14) se situe au-dessus de la voilure (8) de l'aéronef.

19. Aéronef selon la revendication 18, **caractérisé en ce que** le premier pont présente, au-dessus de la voilure (8) et en arrière de celle-ci, également une configuration présentant une première zone (10), une deuxième zone (12) et une troisième zone (14), la deuxième zone (12) étant décalée par rapport à la première zone (10) et à la troisième zone (14).

20. Aéronef selon l'une des revendications 16 à 19, **caractérisée en ce que** l'aéronef présente un fuselage (2) dont le diamètre équivalent est supérieur à 4,50 m.
